# FASCICULE DE BREVET EUROPEEN

(11) **EP 0 754 522 B1**
(45) Date de publication et mention de la délivrance du brevet: **06.10.1999**
(21) Numéro de dépôt: 96401574.7
(22) Date de dépôt: 16.07.1996
(51) Int. Cl.: B23Q 17/20, G01B 21/04

(54) **Procédé d'évaluation de différents défauts d'une machine d'usinage**
Verfahren zur Bewertung verschiedener Fehler einer Werkzeugmaschine
Process for evaluating various errors of a machine-tool

(30) Priorité: 18.07.1995 FR 9508674
(43) Date de publication de la demande: 22.01.1997
(73) Titulaire: COMMISSARIAT A L'ENERGIE ATOMIQUE, 75015 Paris Cédex 15 (FR)
(72) Inventeur: Demesy, Michel, 21121 Fontaine les Dijon (FR)
(74) Mandataire: Dubois-Chabert, Guy

(56) Documents cités:
- EP-A- 0 519 638
- PATENT ABSTRACTS OF JAPAN vol. 15, no. 312 (P-1236), 9 Août 1991 & JP-A-03 111701 (OLYMPUS OPTICAL CO LTD), 13 Mai 1991,
- D.H. BRUINS ET AL.: "Werkzeuge und Werkzeugmaschinen - TEIL 3 - Maschinen" , CARL HANSER VERLAG , MÜNCHEN DE XP002015797 * page 36 - page 42 *

## Description

### Domaine technique

La présente invention concerne un procédé d'évaluation rapide des différents défauts d'une machine d'usinage pouvant avoir des conséquences préjudiciables sur les produits fabriqués.

### Etat de la technique antérieure

Comme décrit dans l'ouvrage référencé [1] en fin de description, l'aptitude d'une machine d'usinage à faire un travail particulier se détermine par la forme, la grandeur et le nombre des pièces à usiner. Il faut aussi tenir compte de l'exactitude des mesures et de la qualité du surfaçage.

L'amélioration de la maîtrise de la précision dimensionnelle des pièces usinées doit s'accompagner notamment d'un suivi rigoureux dans le temps des performances des machines d'usinage, afin de détecter au plus tôt toute dérive de la fabrication.

Les méthodes utilisées actuellement font appel à trois types de vérifications complémentaires, qui doivent être menées successivement afin de connaître la valeur des différents défauts élémentaires d'une machine, ceux-ci étant ensuite susceptibles d'être corrigés :
- Vérifications géométriques à l'aide de comparateurs et de pièces de référence.
- Usinage et contrôle de pièces test en complément des mesures précédentes.
- Mesures par interférométrie laser de la précision de positionnement des chariots, de leur jeu à l'inversion et de la rectitude des guidages.

Ces différentes opérations, décrites notamment dans les références [2] et [3], présentent les inconvénients de nécessiter :
- l'immobilisation de la machine à vérifier pendant plusieurs jours ;
- l'utilisation d'un laser de métrologie qui représente un investissement que ne peuvent pas se permettre des petites ou moyennes entreprises de type PME/PMI, ou qui présente même un coût de location important.

C'est pourquoi les industriels se limitent souvent à une caractérisation des machines d'usinage lors de leur achat (réception pour vérification de la conformité aux normes en vigueur), puis négligent tout suivi dans le temps.

L'invention a pour objet un procédé d'évaluation des défauts d'une machine d'usinage, par exemple un tour à commande numérique, permettant la caractérisation détaillée de ces défauts avec une faible durée d'immobilisation de celle-ci, par exemple de l'ordre de deux heures.

### Exposé de l'invention

La présente invention concerne un procédé d'évaluation de différents défauts d'une machine d'usinage, caractérisé en ce qu'on utilise un palpeur monté sur la tourelle porte outil de la machine dont le déplacement est assuré par les axes de la machine, ledit palpeur venant palper successivement et dans un ordre quelconque trois pièces de référence préalablement étalonnées, une première pièce cylindrique, une seconde pièce cylindrique étagée, une troisième pièce semi-sphérique, chacune étant préalablement immobilisée sur une référence de ladite machine à vérifier.

Avantageusement chaque pièce est montée successivement sur une broche de cette machine de la manière la plus rigide possible, par exemple à l'aide d'un mandrin ou d'un faux plateau.

Dans un exemple de réalisation chacune des trois pièces de référence est inscrite dans un cylindre de 200 mm de diamètre et 200 mm de long. La seconde pièce a un étagement du pas du rayon inférieur ou égal à 10 mm.

Le procédé de l'invention est utilisé actuellement au CEA pour caractériser des tours à commande numérique.

Il peut s'appliquer à toute autre machine deux axes d'usinage ou non, et, moyennant quelques adaptations, à des machines trois axes (fraiseuses, centres d'usinage...).

### Brève description des figures

- La figure 1 illustre une machine d'usinage dans laquelle peut être mis en oeuvre le procédé de l'invention ;
- la figure 2 illustre une première pièce dite "de test de défauts géométriques" ;
- la figure 3 illustre une seconde pièce dite "de test des défauts de positionnement" ;
- la figure 4 illustre une troisième pièce dite "de test du défaut de forme".

### Exposé détaillé de modes de réalisation

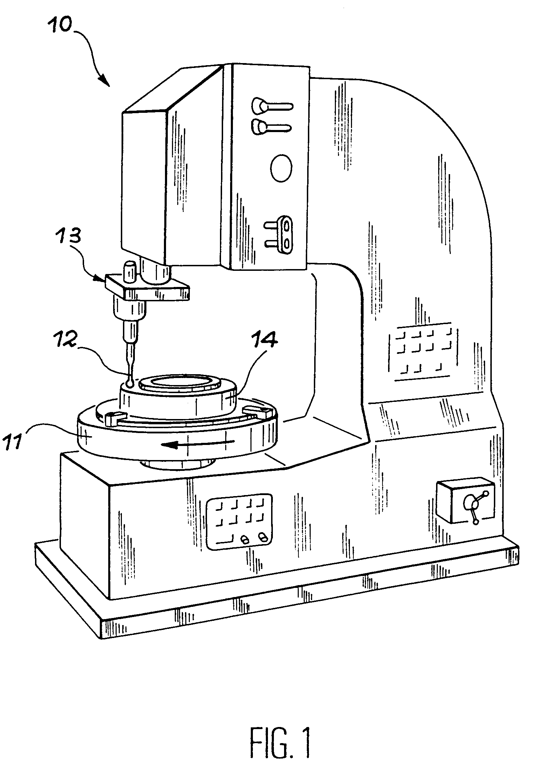

Sur la figure 1 est illustrée un exemple de machine d'usinage 10 mettant en oeuvre le procédé de l'invention.

Ce procédé de l'invention nécessite l'utilisation successive de trois pièces de référence stables dimensionnellement dans le temps, et dont les surfaces fonctionnelles pour les tests décrits ci-après auront été identifiées préalablement avec des moyens de métrologie (machine à mesurer tridimensionnelle par exemple), chacune de ces pièces 14 étant disposée sur la référence 11, appelée ci-après "broche", de ladite machine d'usinage à vérifier, comme représenté sur la figure 1.

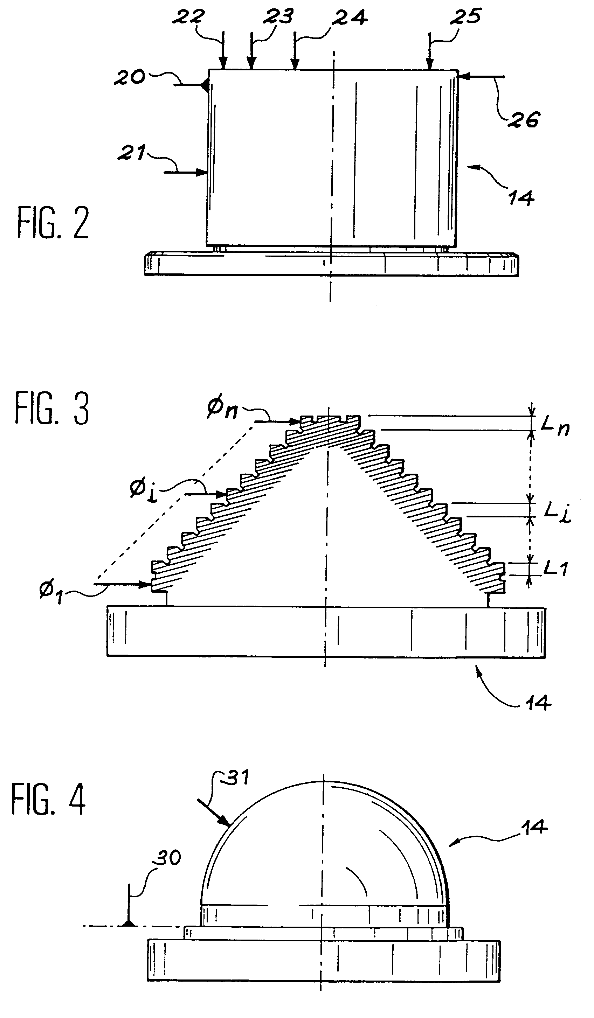

La première pièce, illustrée à la figure 2, appelée "pièce test des défauts géométriques" est constituée par un cylindre de longueur et diamètre fixés en fonction de la capacité de la machine à vérifier. Un palpage des génératrices du cylindre et de la face permet de vérifier le parallélisme de l'axe longitudinal de la machine avec l'axe broche, la perpendicularité de l'axe transversal par rapport à ce même axe broche et la rectitude des déplacements des chariots.

La mise en rotation de la broche permet de vérifier le faux-rond de son axe de rotation, ainsi que le voile de la face d'appui du nez.

La deuxième pièce, illustrée à la figure 3, appelée "pièce test des défauts de positionnement" est constituée par un cylindre étagé.

Le palpage successif des différents diamètres, puis des faces permet de vérifier la précision de positionnement de l'axe transversal et de l'axe longitudinal du tour.

En palpant le diamètre extérieur et la face avant suivant les deux directions de déplacement des chariots, il est possible de mesurer le jeu à l'inversion de ceux-ci.

Les encoches qui existent entre les différents pas de rayons ont uniquement pour objet de faciliter la fabrication, pour permettre le dégagement de la meule de rectification.

La troisième pièce, illustrée à la figure 4, appelée "pièce test du défaut de forme" est constituée par une demi-sphère.

Le palpage d'un méridien du profil sphérique permet d'évaluer le défaut global de la machine en suivi de trajectoire, lorsque viennent se cumuler les erreurs géométriques de positionnement de chacun des axes et de synchronisation de leur déplacement lors d'un usinage en deux axes simultanés.

Ainsi selon le procédé de l'invention un palpeur 12 monté sur la tourelle porte-outils 13 de la machine 10 et dont le déplacement est assuré par les axes de la machine vient palper successivement chacune des trois pièces 14 qui sont montées sur la broche, ou partie mobile en rotation 11, permettant de porter une pièce à usiner de la manière la plus rigide possible (immobilisée par exemple avec un mandrin ou avec un faux plateau).

Sur la figure 2 sont représentés les positionnements du palpeur qui en utilisant une référence de contrôle 20 permettent de vérifier :
- la rectitude (21) ;
- la planéité (22) ;
- le battement (23) ;
- le double battement (24) ;
- la rectitude (25) ;
- la circularité (26).

Sur la figure 3 sont représentés les différents diamètres φi et la longueur Li correspondante à chaque diamètre.

Sur la figure 4 sont représentés deux positionnements du palpeur permettant, en utilisant une référence 30, de vérifier un défaut de forme (31).

Dans un exemple de réalisation avantageux chacune de ces trois pièces est inscrite dans un cylindre de 200 mm de diamètre et 200 mm de long, et est réalisée dans un acier stabilisé, par exemple un acier Z160CDV 12 traité 60 HCR stabilisé.

La seconde pièce, illustrée à la figure 3, a un étagement du pas du rayon inférieur ou égal à 10 mm, par exemple 5 mm.

L'analyse des résultats obtenus (informations mesurées par le palpeur) lors des tests ci-dessus permet donc d'identifier rapidement les différents défauts de la machine à caractériser, et éventuellement de provoquer une opération de réglage de celle-ci en cas de dépassement de bornes de surveillance qui auraient été déterminées dans le cas de la mise en place d'une démarche de maîtrise des procédés de fabrication.

On peut noter que la qualité des trois pièces de référence ne doit pas être obligatoirement "parfaite" pour réaliser ces tests. Par contre, il est nécessaire que leurs défauts éventuels soient bien connus, afin de pouvoir en tenir compte au niveau des résultats obtenus lors des vérifications machine.

Pour caractériser une machine à trois axes linéaires ces trois pièces de référence sont utilisables. Leur palpage avec un capteur monté dans la broche porte-outils de la fraiseuse ou du centre d'usinage doit alors être effectué suivant deux méridiens décalés angulairement de 90°.

### REFERENCES

[1] "Les Machines-outils" de Heinrich Gerling (Eyrolles Editeur)
[2] Normes françaises NF E 60-097 et 102
[3] Norme internationale ISO 230-2

## Revendications

1. Procédé d'évaluation de différents défauts d'une machine d'usinage, dans lequel on utilise un palpeur (12) monté sur une tourelle porte-outil (13) de la machine (10) dont le déplacement est assuré par les axes de la machine, caractérisé en ce que ledit palpeur venant palper successivement et dans un ordre quelconque trois pièces de référence (14) préalablement étalonnées : une première pièce cylindrique, une seconde pièce cylindrique étagée, une troisième pièce semi-sphérique, chacune étant préalablement immobilisée sur une référence (11) de ladite machine à vérifier.

2. Procédé selon la revendication 1, caractérisé en ce que chaque pièce est immobilisée à l'aide d'un mandrin ou d'un faux plateau.

3. Procédé selon la revendication 1, caractérisé en ce que chacune des trois pièces de référence est inscrite dans un cylindre de 200 mm de diamètre et 200 mm de long.

4. Procédé selon la revendication 1, caractérisé en ce que la seconde pièce a un étagement du pas du rayon inférieur ou égal à 10 mm.

5. Procédé selon l'une quelconque des revendications 1 à 4, caractérisé en ce que la machine d'usinage est un tour à commande numérique.

## Claims

1. Process for the evaluation of various defects of a machining machine, in which use is made of a sensor mounted on the tool holding capstan of the machine, whose displacement is ensured by the shafts of the machine, characterized in that said sensor successively sensing in a random order three, previously calibrated reference parts, namely a first cylindrical part, a second stepped, cylindrical part and a third hemispherical part, each being previously immobilized on a reference of said machine to be checked.

2. Process according to claim 1, characterized in that each part is immobilized with the aid of a chuck or an adaptor plate.

3. Process according to claim 1, characterized in that each of the three reference parts is inscribed in a diameter 200 mm, 200 mm long cylinder.

4. Process according to claim 1, characterized in that the second part has a stepping of the radius spacing equal to or below 10 mm.

5. Process according to any one of the claims 1 to 4, characterized in that the machining machine is a numerically controlled lathe.

## Patentansprüche

1. Verfahren zur Bewertung verschiedener Fehler einer Werkzeugmaschine, bei dem man einen in einen Werkzeughalter (13) der Maschine (10) montierten Taster (12) benutzt, dessen Verschiebung durch die Achsen der Maschine erfolgt,
**dadurch gekennzeichnet,**
daß der genannte Taster nacheinander und in beliebiger Reihenfolge drei vorher geeichte Referenzteile (14) abtastet: ein erstes, zylindrisches Teil, ein zweites, abgestuftes Teil und eine drittes, halbkugelförmiges Teil, von denen jedes vorher auf einem Bezugspunkt bzw. einer Bezugsfläche (11) der zu überprüfenden Maschine immobilisiert bzw. befestigt wurde.

2. Verfahren nach Anspruch 1, dadurch gekennzeichnet, daß jedes Teil mit Hilfe eines Spannfutters oder einer Bajonettscheibe befestigt wird.

3. Verfahren nach Anspruch 1, dadurch gekennzeichnet, daß jedes der drei Referenzteile sich innerhalb eines Zylinders von 200mm Durchmesser und 200mm Länge befindet.

4. Verfahren nach Anspruch 1, dadurch gekennzeichnet, daß das zweite Teil einen Radiusabstufungsschritt von weniger oder gleich 10mm aufweist.

5. Verfahren nach einem der Ansprüche 1 bis 4, dadurch gekennzeichnet, daß die Bearbeitungsmaschine eine Drehmaschine mit digitaler Steuerung ist.
